# EUROPÄISCHE PATENTANMELDUNG

(11) **EP 0 612 779 A2**
(43) Veröffentlichungstag der Anmeldung: **31.08.1994**
(21) Anmeldenummer: 94102472.1
(22) Anmeldetag: 18.02.1994
(51) Int. Cl.: C08G 63/60, C09D 167/00

(54) **Sauer modifizierte Polyester und deren Verwendung in Einbrennlacken**

(30) Priorität: 26.02.1993 DE 4305990
(71) Anmelder: HOECHST AKTIENGESELLSCHAFT, D-65926 Frankfurt am Main (DE)
(72) Erfinder: Oberressl, Paul, D-65189 Wiesbaden (DE); Zöller, Joachim, Dr., D-55128 Mainz (DE)

(57) **Zusammenfassung**

Sauer modifizierte Polyester, erhalten durch Umsetzung von
(a) 20 bis 60, vorzugsweise 30-50 mol % mindestens einer Dicarbonsäure,
(b) 3 bis 30, vorzugsweise 5-20 mol % einer Di-hydroxyalkancarbonsäure,
(c) 10 bis 60, vorzugsweise 20-50 mol % eines Diols,
(d) 0 bis 30 mol % eines Polyalkohols mit mehr als zwei OH-Gruppen oder einer Polycarbonsäure und
(e) 0 bis 20, vorzugsweise bis zu 10 mol% einer Monocarbonsäure,
wobei das Verhältnis der Summe der Hydroxyläquivalente zur Summe der Carboxyläquivalente in den Reaktanden zwischen 0,5 und 2,0 liegt, die Mengen an freien Hydroxylgruppen im Endprodukt zwischen 30 und 350 mmol Hydroxylgruppen in 100 g Festharz, bevorzugt zwischen 100 und 250 mmol Hydroxylgruppen in 100 g Festharz, liegen und der Gehalt an freien neutralisierten und/oder neutralisierbaren Säuregruppen zwischen 5 und 350 mmol Säuregruppen in 100 g Festharz, vorzugsweise zwischen 9 und 120 mmol Säuregruppen in 100 g Festharz, liegt.

## Beschreibung

Die Erfindung betrifft wäßrige Dispersionen von Bindemitteln auf Basis ölfreier Polyester, ein Verfahren zu ihrer Herstellung und ihre Verwendung zur Herstellung von Einbrennlacken.

Wäßrige Polyesterdispersionen werden in den unterschiedlichsten Einsatzgebieten immer wichtiger, da die Reduktion der Lösemittelemissionen eine steigende Bedeutung erlangt. Polyesterbindemittel in wäßriger Zubereitung sind bekannt, haben sich aber in der Verpackungsindustrie noch nicht durchsetzen können.

So beschreibt die EP 498 156 und EP 140 323 urethangruppenhaltige Polyester für Einbrennlacke und die EP 427 028, EP 158 099 sowie EP 157 291 urethangruppenhaltige Polyester, deren wäßrige Dispersionen noch Emulgatoren enthalten. Die DE 37 26 956 beschreibt eine Beschichtungsmasse für Einbrennlacke in der das Reaktionsprodukt eines Polyesters mit Harnstoff und/oder Dicyandiamid enthalten ist und die DE 35 37 855 einen Polyester der Polyetherpolyole und ein Acrylatharz enthält und der als Einbrennlack Verwendung findet. Die EP 113 800 beschreibt Alkydharzmischungen, in die Polyetherpolyole einkondensiert sind. Die EP 54 216 und US 4,054,614 beschreibt Polyester für Einbrennlacke, die durch Umsetzung eines Polyesters mit Dicarbonsäureanhydriden wasserdispergierbar gemacht werden. EP 9 122 beschreibt eine Polyesterdispersion, die sekundäre oder tertiäre Carboxylgruppen und 3 - 15% Emulgator enthält. Die EP 364 331 und die DE 25 16 305 beschreiben weiterhin Polyester für Einbrennlacke, die Sulfonatgruppen tragen, um die Wasserlöslichkeit zu vermitteln.

An Einbrennlacke für die Verpackungsindustrie (can and coil-coating) und speziell an Dosenlacke werden hohe Forderungen gestellt. So sollen die getrockneten Filme eine hohe Härte bei gleichzeitig hoher Elastizität aufweisen. Weitere wichtige Kriterien sind weiterhin eine hohe Farbtonbeständigkeit und Gilbungsfestigkeit sowie eine ausreichende Lagerstabilität. Am schwierigsten sind jedoch die extreme Wasserfestigkeit oder Wasserdampfbeständigkeit zu erreichen, die bei Sterilisationsprozessen gefordert werden. So wird vor allem die geforderte Wasserdampfbeständigkeit bei der Sterilisation von den bisher bekannten wäßrigen Polyestern nicht erreicht.

Es wurde nun gefunden, daß wäßrige Beschichtungszusammensetzungen auf Basis von bestimmten, in Wasser dispergierbaren Polyestern diese Nachteile nicht aufweisen. Die im Nachfolgenden beschriebenen Polyester zeichnen sich durch gute Lagerstabilitäten, hohe Farbtonbeständigkeiten, hohe Elastizität bei gleichzeitig hoher Härte und besonders durch die sehr gute Wasserdampfbeständigkeit aus. Ein weiterer Vorteil ist der sehr große Einbrennbereich (130 - 200°C), in dem Filme mit gleich guten Eigenschaften erhalten werden können.

Gegenstand der Erfindung sind daher sauer modifizierte Polyester, erhalten durch Umsetzung von
(a) 20 bis 60, vorzugsweise 30-50 mol % mindestens einer Dicarbonsäure,
(b) 3 bis 30, vorzugsweise 5-20 mol % einer Dihydroxyalkancarbonsäure,
(c) 10 bis 60, vorzugsweise 20-50 mol % eines Diols,
(d) 0 bis 30 mol % eines Polyalkohols mit mehr als zwei OH-Gruppen oder einer Polycarbonsäure und
(e) 0 bis 20, vorzugsweise bis zu 10 mol% einer Monocarbonsäure,
wobei das Verhältnis der Summe der Hydroxyläquivalente zur Summe der Carboxyläquivalente in den Reaktanden zwischen 0,5 und 2,0 liegt, die Mengen an freien Hydroxylgruppen im Endprodukt zwischen 30 und 350 mmol Hydroxylgruppen in 100 g Festharz, bevorzugt zwischen 100 und 250 mmol Hydroxylgruppen in 100 g Festharz, liegen und der Gehalt an freien neutralisierten und/oder neutralisierbaren Säuregruppen zwischen 5 und 350 mmol Säuregruppen in 100 g Festharz, vorzugsweise zwischen 9 und 120 mmol Säuregruppen in 100 g Festharz, liegt.

Die Dicarbonsäurekomponente (a) des Polyesters besteht aus gesättigten oder ungesättigten aliphatischen, aromatischen oder cycloaliphatischen Dicarbonsäuren sowie Dimerfettsäuren oder aus Mischungen zweier oder mehrerer dieser Dicarbonsäuren. Beispiele für diese Dicarbonsäuren sind Oxal-, Malon-, Glutar-, Adipin-, Pimelin-, Azelain, Sebacin-, Bernstein-, Fumar-, Malen-, und Itaconsäure, 1,3-Cyclopentandicarbonsäure,1,2-Cyclohexandicarbonsäure,1,3-Cyclohexandicarbonsäure, 1,4-Cyclohexandicarbonsäure, Phthal-,Terephthal-, Isophthalsäure, 2,5-Norbornandicarbonsäure, 1,4-Naphthalindicarbonsäure, Diphenyldicarbonsäure, 4,4'-Sulfonyldibenzoesäure und 2,5-Naphthalindicarbonsäure sowie deren Ester oder deren Anhydride.

Bevorzugte Dicarbonsäurekomponenten (a) sind Phthal-, Isophthal- und Terephthalsäure, Phthalsäureanhydrid, Adipin-, Bernsteinsäure, Bernsteinsäureanhydrid, Dimerfettsäuren, Sebacin- und Azelainsäure, 1,3-Cyclohexandicarbonsäure und Glutarsäure sowie deren Ester.

Bei Komponente (b) des zu beschreibenden Polyesters handelt es sich um eine Dihydroxyalkancarbonsäure, wie zum Beispiel Dimethylolpropionsäure, Dihydroxypropionsäure, Dihydroxybernsteinsäure und Dihydroxyhexansäure. Besonders bevorzugt ist die Dimethylolpropionsäure.

Die Diolkomponente (c) kann aus niedermolekularen aliphatischen, cycloaliphatischen oder aromatischen Diolen mit vorzugsweise 2 bis 24 C-Atomen im Molekül bestehen. Als Beispiele für die Diole seien genannt: Ethylenglykol, 1,2-Propandiol, 1,3-Propandiol, 2,2-Dimethyl-1,3-propandiol, 1,3-Butandiol, 1,4-Butandiol, 1,5-Pentandiol, 1,6-Hexandiol, 2,2,4-Trimethyl-1,6-hexandiol, 1,2-Cyclohexandimethanol, 1,3-Cyclohexandimethanol, 1,4-Cyclohexandimethanol, perhydrierte Bisphenole, z.B. Perhydro-bisphenol A, p-Xylylendiol, 2-Ethyl-, 2-Butylpropandiol.

Als höherfunktionelle Komponente (d), die 3 bis vorzugsweise 6 Hydroxyl- oder Carboxylgruppen enthält, seien beispielsweise genannt Trimethylolpropan, Trimethylolethan, Glycerin, Ditrimethylolpropan, Pentaerythrit, Dipentaerythrit, Trimellitsäureanhydrid, Pyromellitsäureanhydrid sowie Polyanhydride wie in DE 28 11 913 beschrieben oder Mischungen zweier oder mehrerer dieser Verbindungen, wobei der Anteil der höherfunktionellen Komponente (d) bevorzugt 5 bis 30 mol%, insbesondere 8 bis 20 mol%, beträgt.

Bei den monofunktionellen Carbonsäuren (e) handelt es sich vorwiegend um Fettsäuren mit vorzugsweise 10 bis 18 C-Atomen wie die Caprinsäure, Laurinsäure, Stearinsäure, Linolsäure, Linolensäure, Ölsäure, Leinölfettsäure und Palmitinsäure, es können jedoch auch verzweigte Carbonsäuren wie die Isovaleriansäure und Isooctansäure eingesetzt werden.

Die Herstellung der Polyester erfolgt durch eine an sich bekannte Polykondensation der angegebenen Komponenten, wobei die Reaktion gegebenenfalls in Gegenwart von üblichen Veresterungskatalysatoren, vorzugsweise nach dem Prinzip einer Schmelz- oder Azeotropkondensation, bei Temperaturen von ca. 140 ° bis 260 °C unter Wasserabspaltung durchgeführt wird.

Um eine möglichst quantitative Cokondensation zu erreichen, kann es erforderlich sein, die Synthese der Polyester in einem mehrstufigen Verfahren durchzuführen. So kann zunächst ein OH-funktioneller Polyester dargestellt werden, der dann mit der Bishydroxyalkancarbonsäure und einer weiteren Dicarbonsäure zum gewünschten Polyester kondensiert wird.

Die Reaktion findet bei Temperaturen zwischen 140°C und 260°C, bevorzugt zwischen 160°C und 220°C, statt. Zur Vermeidung von Diolverlusten erfolgt die Destillation des Kondensates über eine Destillationskolonne. Als Katalysatoren kommen bevorzugt Organometallverbindungen, insbesondere zink-, zinn- oder titanhaltige Verbindungen wie z. B. Zinkacetat, Dibutylzinnoxid oder Tetrabutyltitanat in Betracht. Die Menge an Katalysator beträgt bevorzugt 0,01 bis 1,5 Gew.-% der Menge des Gesamtansatzes.

Das Zahlenmittel des Molekulargewichts des Polyesterharzes, experimentell mit Hilfe der Gelpermeationschromatographie bestimmt, kann zwischen 500 und 5000 liegen, bevorzugt wird 1000 bis 3500 g/mol.

Die Säuregruppen können bereits in neutralisierter Form über die Einzelkomponenten in den Polyester eingeführt werden, liegen freie Säuregruppen im fertigen Polyester vor, so kann deren Neutralisation nachträglich mit wäßrigen Lösungen von Alkalihydroxiden oder mit Aminen, zum Beispiel mit Trimethylamin, Triethylamin, Dimethylanilin, Diethylanilin, Triphenylamin, Dimethylethanolamin, Aminomethylpropanol, Dimethylisopropanolamin oder mit Ammoniak durchgeführt werden. Die Isolierung des Polyesters kann in Substanz erfolgen, bevorzugt wird jedoch die Herstellung einer 50 bis 95 %igen Lösung in einem wassermischbaren, organischen Lösemittel. In Frage kommen hierfür bevorzugt sauerstoffhaltige Lösemittel wie Alkohole, Ketone, Ester, Ether, z.B: Ethanol, n-Propanol, iso-Propanol, iso-Butanol, Butylacetat und Butylglykol, oder stickstoffhaltige Lösemittel wie z.B. N-Methylpyrrolidon. Die Viskosität dieser Lösungen liegt bei 60°C bevorzugt zwischen 0,5 und 40 Pa s.

Zur Herstellung der wäßrigen Dispersionen werden die neutralisierten Polyesterharze oder deren Lösungen in wassermischbaren Lösemitteln in Wasser dispergiert, was durch einfaches Einrühren von Wasser in die vorgelegten Polyesterharze mittels üblicher Dissolver oder anderer geeigneter Rührorgane, oder auch durch Eingießen in Wasser unter heftigem Rühren erfolgen kann. Gegebenenfalls kann zunächst ein Teil des Wassers zugegeben und dann diese Mischung unter Rühren in die Restmenge Wasser gegossen werden. Das Harz kann auch invers dispergiert werden. Man erhält auf diese Weise stabile Öl-in-Wasser-Emulsionen. Die Menge an Wasser wird so bemessen, daß die fertige Dispersion vorzugsweise 15 bis 65 Gew.-% Polyester, 0 bis 30 Gew.-% organischer Lösemittel und 35 bis 85 Gew.-% Wasser enthält. Der pH-Wert wird auf Werte von 2 bis 8,5, bevorzugt 4 bis 8 eingestellt.

Die beanspruchte wäßrige Bindemittelzusammensetzung enthält, bezogen auf die gesamte Formulierung, im allgemeinen 5 bis 40, vorzugsweise 15 bis 30 Gew.-% an Polyesterharz. Neben dem Polyesterharz kann die wäßrige Bindemitteldispersion als Bindemittel zusätzlich noch bis zu 60, vorzugsweise bis zu 30 Gew.-%, bezogen auf das Polyesterharz, anderer oligomerer oder polymerer Materialien enthalten, wie vernetzungsfähige, wasserlösliche oder wasserdispergierbare Phenolharze, Polyurethanharze, Epoxidharze oder Acrylharze etc., wie beispielsweise in der EP-A 89 497 beschrieben.

Als Vernetzungsmittel sind die für Polyesterharze üblichen Härter geeignet, sofern sie wasserverträglich sind. Genannt seien hier beispielsweise wasserverträgliche (wasserlösliche oder wasserdispergierbare) Aminoharze, insbesondere handelsübliche veretherte Melamin-Formaldehyd-Kondensate wie Hexamethoxymethylmelamin, Phenolharze oder blockierte Polyisocyanate, wie beispielsweise in der DE-A 36 44 372 beschrieben.

Die Menge an Vernetzungsmittel liegt üblicherweise bei 10 bis 35 Gew.-%, vorzugsweise 15 bis 25 Gew.-%, bezogen auf die Summe aus zu vernetzendem Bindemittel und Vernetzer. Die wäßrige Bindemittelzusammensetzung gemäß der Erfindung, deren pH-Wert durch Zugabe von Aminen, wie z.B. Triethylamin, Dimethylethanolamin, Diethanolamin und Triethanolamin, so eingestellt werden kann, daß er im Bereich von 6,0 bis 10,0, bevorzugt von 6,8 bis 8,5 liegt, kann noch die üblichen Lackadditive, wie Pigmente und Füllstoffe, sowie Lackhilfsmittel, z.B. Antiabsetzmittel, Entschäumungs- und/oder Netzmittel, Verlaufmittel, Reaktivverdünner, Weichmacher, Katalysatoren, Hilfslösemittel, Verdicker und dgl. enthalten. Zumindest ein Teil dieser Additive kann der Bindemittelzusammensetzung erst unmittelbar vor der Verarbeitung zugegeben werden. Die Auswahl und die Dosierung dieser Stoffe, die den Einzelkomponenten und/oder der Gesamtmischung zugegeben werden können, sind dem Fachmann bekannt. Als Pigment sind beispielsweise Eisenoxide, Bleioxide, Bleisilikate, Titandioxid, Bariumsulfat, Zinkoxid, Zinksulfid, Phthalocyaninkomplexe etc. zu nennen, und als Füllstoffe Glimmer, Kaolin, Kreide, Quarzmehl, Asbestmehl, Schiefermehl, verschiedene Kieselsäuren, Silikate sowie Talkum inklusive von sog. Mikrotalkum, mit einer Kornfeinheit von maximal 10 µm (vgl. EP-A 249 727). Diese Pigmente und/oder Füllstoffe werden üblicherweise in Mengen von 10 bis 70, vorzugsweise von 30 bis 50 Gew.-%, bezogen auf den Gesamtfestkörpergehalt der Bindemittelzusammensetzung, eingesetzt.

Weitere Hilfslösemittel, beispielsweise Ether wie Dimethyl(diethyl)glykol, Dimethyl(diethyl)diglykol, Tetrahydrofuran, Ketone, wie Methylethylketon, Aceton, Cyclohexanon, Ester wie Butylacetat, Ethylglykolacetat, Methylglykolacetat, Methoxypropylacetat, Alkohole wie Ethanol, Propanol, Butanol werden, wenn überhaupt, aus Gründen der Umweltfreundlichkeit nur in möglichst geringer Menge verwendet, die in der Regel 10, vorzugsweise bis 5 Gew.-%, bezogen auf Wasser (als dem hauptsächlichen Verdünnungsmittel) nicht überschreitet. Die Menge an Wasser in der wäßrigen Bindemittelzusammensetzung liegt zumeist bei 15 bis 80 Gew.-%, vorzugsweise 30 bis 60 Gew.-%, bezogen auf die gesamte Bindemittelzusammensetzung.

Die Herstellung der wäßrigen Bindemittelzusammensetzung erfolgt nach den üblichen Methoden der Lackherstellung, wie beispielsweise aus der weiter unten angegebenen Richtrezeptur ersichtlich.

Der Auftrag der wäßrigen Bindemittelzusammensetzungen, die mit Wasser unendlich verdünnbar sind und deren Gesamtfestkörpergehalt (bestimmt durch Trocknung bei 125 °C während 2 Stunden) im allgemeinen 30 bis 75, vorzugsweise 35 bis 60 Gew.-% beträgt, geschieht in bekannter Weise, beispielsweise durch Walzauftrag oder mittels luftloser oder elektrostatischer Spritzverfahren. Zur Härtung der aufgebrachten Lackschichten werden im allgemeinen Temperaturen von 120 bis 200 °C, vorzugsweise 130 bis 190 °C, angewendet. Die Härtungsdauer liegt im allgemeinen bei 1 bis 30 Minuten, vorzugsweise 10 Minuten, auch eine Schocktrocknung ist möglich.

Die so erhaltenen vernetzten Beschichtungen zeichnen sich insbesondere durch verbesserte Verformbarkeit und sehr gute Sterilisationsfestigkeit aus. Außerdem besitzen sie eine gute Farbtonbeständigkeit.

### Beispiele

Die Durchführung der Polyestersynthese erfolgt in einem 4l-Vierhalskolben mit aufgesetzter Füllkörperkolonne (Kolonnenrohr: 30 mm Durchmesser, 2000 mm Länge; Füllkörper: Glasringe mit 6 mm Durchmesser und 6 mm Länge) und absteigender Destillationsbrücke, mit Temperaturkontrolle des Reaktionsgutes unter Schutzgasatmosphäre (Schutzgaszufuhr, Stickstoff). Werden niedrigsiedende Alkohole, insbesondere Methanol als Kondensat abdestilliert, ist die Vorlage mit einem Eisbad zu kühlen.

### Polyester 1

**Stufe 1:** 520 g Neopentylglykol und 200 g Trimethylolpropan werden aufgeschmolzen, 360 g Terephthalsäure, 260 g Isophthalsäure und 1,3 g Dibutylzinnoxid werden zugegeben. Man heizt so auf, daß die Kopftemperatur 100 °C nicht überschreitet. Die Kondensation erfolgt bei 160 °C bis 210 °C, bis ein Gehalt an Säuregruppen von 10 mmol Säure in 100 g Festharz erreicht wird.
**Stufe 2:** Es wird auf 140 °C abgekühlt, 400 g Adipinsäure und 100 g Dimethylolpropionsäure werden zugeben und man heizt auf, so daß die Kopftemperatur 100 °C nicht überschreitet. Die Kondensation erfolgt bei Temperaturen bis zu 205 °C, bis ein Wert von 55 mmol Säure in 100 g Festharz erreicht ist. Danach wird auf 80 °C abgekühlt und es werden 300g Butylglykol zugegeben.

### Polyester 2

**Stufe 1:** 520 g Neopentylglykol und 250 g Trimethylolpropan werden aufgeschmolzen, und man gibt 400 g Terephthalsäure, 360 g Isophthalsäure, 230 g Stearinsäure und 1,8 g Dibutylzinnoxid zu. Dann heizt man so auf, daß die Kopftemperatur 100 °C nicht überschreitet, die Kondensation erfolgt bei 190 °C bis 200 °C, bis ein Gehalt an Säuregruppen von 10 mmol Säure in 100 g Festharz erreicht ist.
**Stufe 2:** Man kühlt auf 140 °C ab, gibt 280 g Adipinsäure und 150 g Dimethylolpropionsäure zu und heizt so auf, daß die Kopftemperatur 100 °C nicht überschreitet. Die Kondensation erfolgt bei Temperaturen bis zu 210 °C, bis ein Wert von 55 mmol Säure in 100 g Festharz erreicht ist. Danach wird auf 80 °C abgekühlt, und man gibt 300 g Butylglykol zu.

### Polyester 3

**Stufe 1:** 300 g Neopentylglykol, 250 g Hexandiol und 250 g Trimethylolpropan werden aufgeschmolzen, 480 g Terephthalsäure, 380 g Isophthalsäure, 150 g Laurinsäure und 1,3 g Dibutylzinnoxid werden zugegeben. Dann heizt man auf, so daß die Kopftemperatur 100 °C nicht überschreitet. Die Kondensation erfolgt bei 190 °C bis 220 °C, bis ein Gehalt an Säuregruppen von 10 mmol Säure in 100 g Festharz erreicht ist.
**Stufe 2:** Man kühlt ab auf 140 °C, gibt 200 g Adipinsäure und 150 g Dimethylolpropionsäure zu und heizt so auf, daß die Kopftemperatur 100 °C nicht überschreitet. Die Kondensation erfolgt bei Temperaturen bis zu 205 °C, bis ein Wert von 55 mmol Säure in 100 g Festharz erreicht ist. Dann kühlt man auf 80 °C ab und gibt 330 g Butylglykol zu.

Mit den Polyestern aus den Beispielen 1, 2 und 3 werden nach den folgenden Rezepten Dispersionen hergestellt:

### Dispersionen

**D 1**
   1000 g des Polyesters (1-3) werden unter Rühren auf 70 °C erwärmt. Innerhalb von 10 min werden 30 g N,N-Dimethylethanolamin zugetropft. Nach 30 min Einrührzeit werden 630 g E-Wasser, das auf 80 °C temperiert ist, zugetropft. Die Lagerstabilität der Dispersionen beträgt bei 25 °C mehr als 4 Monate.
**D 2**
   1000 g des Polyesters (1-3) werden unter Rühren auf 70 °C erwärmt. Innerhalb von 10 min werden 30 g N,N-Dimethylethanolamin zugetropft. Nach 15 min Einrührzeit werden 215 g auf 70 °C erwärmtes E-Wasser zugegeben. Diese Lösung wird dann unter Rühren in 415 g E-Wasser, das auf 50 °C temperiert ist, gegossen. Nach einstündigem Nachrühren und Abkühlen auf Raumtemperatur erhält man eine bläuliche fast klare Dispersion.

Die Lagerstabilität der Dispersionen beträgt bei 25 °C mehr als 4 Monate.

### Richtrezeptur zur Formulierung von Emballagen-Außenlacken

64,0 Teile Bindemittel (Dispersion aus Polyester 1 nach Rezept 2, aus Polyester 2 und 3 nach Rezept 1) wurden mit 6 Teilen eines handelsüblichen Melamin-Formaldehyd-Kondensats, 27,20 Teilen Titandioxyd, 1,25 Teilen Butylglykol sowie 1,55 Teilen der üblichen Lackhilfsmittel in einer Perlmühle dispergiert (20 min, bei ca. 20 m/s Umfangsgeschwindigkeit).

Die Applikation des Emballagen-Außenlackes erfolgt mittels Spiralrakel auf verzinntem Stahlblech (Dosenblech E1) und Aluminiumblech. Die Härtung erfolgt im Umluftofen bei 180 °C für 10 Minuten. Es resultieren Schichtdicken von ca. 5 µm.

Die Prüfergebnisse sind in der nachfolgenden Tabelle zusammengefaßt. Die Beständigkeiten (Sterilisationsfestigkeit in Wasser, Verformbarkeit, Glanz, Lösemittelfestigkeit) entsprechen den Praxisanforderungen.

| **Dispersion aus Polyester nach Rezept** | **1 D2** | **2 D1** | **3 D1** |
|---|---|---|---|
| **auf Aluminium** | | | |
| Schichtdicke,µm | 5 | 5 | 5 |
| Gitterschnitt, Gt | 0 | 0 | 0 |
| Glanz, 60°-Winkel | 90 % | 90 % | 70 % |

| Verformbarkeit | | | |
|---|---|---|---|
| 1. Zug | i.O. | i.O. | i.O. |
| 2. Zug | i.O. | i.O. | i.O. |
| 3. Zug | i.O. | i.O. | i.O. |
| Sterilisationsfestigkeit | i.O. | i.O. | Mattierung |
| 1^{h}/121°C ention. Wasser Acetontest, Doppelhübe | 25 | 20 | 10 |

| **auf Weißblech E1** | | | |
|---|---|---|---|
| Schichtdicke,µm | 5 | 5 | 5 |
| Gitterschnitt, Gt | 0 | 0 | 0 |
| Glanz, 60°-Winkel | 90 % | 80 % | 70 % |

| Verformbarkeit | | | |
|---|---|---|---|
| 1. Zug | i.O. | i.O. | i.O. |
| 2. Zug | i.O. | i.O. | i.O. |
| 3. Zug | i.O. | i.O. | i.O. |
| Sterilisationsfestigkeit | i.O. | i.O. | Mattierung |
| 1^{h}/121°C,ention. Wasser Acetontest, Doppelhübe | 25 | 20 | 10 |

### Schichtdicke:

wurde mittels handelsüblichem, bei Weißblechen auf magnetischer Basis für Aluminium auf Wirbelstrom-Basis arbeitenden, Schichtdickenmessgerät bestimmt.

### Gitterschnitt:

wurde nach DIN 53151 bestimmt. Bewertungsskala von 0 (bester Wert) bis 5 (schlechtester Wert).

### Glanz:

wurde mit handelsüblichem Gerät bestimmt (Basis ist der Glanz einer polierten schwarzen Glasplatte).

### Verformbarkeit:

wurde mittels der Erichsen-Mehrfachtiefzug-Maschine bestimmt.

### Sterilisationsfestigkeit:

wurde in einem Autoklav bestimmt, in welchem sich die Prüflinge völlig eingetaucht in deionisiertem Wasser befanden. Der Druck bei 121 °C betrug 1,2 bar.

### Acetonfestigkeit:

ein mit Aceton vollgesogener Wattebausch wird mit 1000 g Belastung über eine Wegstrecke von 100 mm mit gleichmäßiger Geschwindigkeit über die lackierte Fläche bidirektional gezogen.

Der Test wird abgebrochen, sobald erste Wischspuren auf der Lackoberfläche erkennbar sind. Die bei der Prüfung angegebene Zahl bezeichnet also die Anzahl der Doppelwischungen bei welcher gerade noch kein Angriff erkennbar ist.

## Patentansprüche

1. Sauer modifizierte Polyester, erhalten durch Umsetzung von
(a) 20 bis 60, vorzugsweise 30-50 mol % mindestens einer Dicarbonsäure,
(b) 3 bis 30, vorzugsweise 5-20 mol % einer Dihydroxyalkancarbonsäure,
(c) 10 bis 60, vorzugsweise 20-50 mol % eines Diols,
(d) 0 bis 30 mol % eines Polyalkohols mit mehr als zwei OH-Gruppen oder einer Polycarbonsäure und
(e) 0 bis 20, vorzugsweise bis zu 10 mol% einer Monocarbonsäure,
wobei das Verhältnis der Summe der Hydroxyläquivalente zur Summe der Carboxyläquivalente in den Reaktanden zwischen 0,5 und 2,0 liegt, die Mengen an freien Hydroxylgruppen im Endprodukt zwischen 30 und 350 mmol Hydroxylgruppen in 100 g Festharz, bevorzugt zwischen 100 und 250 mmol Hydroxylgruppen in 100 g Festharz, liegen und der Gehalt an freien neutralisierten und/oder neutralisierbaren Säuregruppen zwischen 5 und 350 mmol Säuregruppen in 100 g Festharz, vorzugsweise zwischen 9 und 120 mmol Säuregruppen in 100 g Festharz, liegt.

2. Polyester nach Anspruch 1, dadurch gekennzeichnet, daß er als Komponente (b) Dimethylolpropionsäure enthält.

3. Verwendung der Polyester nach Anspruch 1 als Bindemittel in Einbrennlacken.

4. Verwendung der Polyester nach Anspruch 1 als Bindemittel in Emballagen-Außenlacken.
